# EUROPÄISCHE PATENTANMELDUNG

(11) **EP 0 886 356 A2**
(43) Veröffentlichungstag der Anmeldung: **23.12.1998**
(21) Anmeldenummer: 98109884.1
(22) Anmeldetag: 29.05.1998
(51) Int. Cl.: H02G 3/04

(54) **Wellrohrweiche**

(30) Priorität: 18.06.1997 DE 19725811
(71) Anmelder: FRÄNKISCHE ROHRWERKE, GEBR. KIRCHNER GmbH & Co., D-97486 Königsberg (DE)
(72) Erfinder: Krauss, Manfred, 97084 Würzburg (DE); Göpfert, Bernd, 96135 Stegaurach (DE); Margot, Christian, 25000 Besançon (FR)
(74) Vertreter: Schwabe - Sandmair - Marx

(57) **Zusammenfassung**

Die Erfindung betrifft eine Wellrohrweiche mit einem Hauptwellrohr, wobei erfindungsgemäß mindestens ein Nebenwellrohr in das Hauptwellrohr mündet.

## Beschreibung

Die vorliegende Erfindung betrifft eine Wellrohrweiche nach Anspruch 1, Verbindungsmittel zum Verbinden der Wellrohrweichen mit Wellrohren oder anderen Wellrohrweichen nach Anspruch 7, eine Wellrohranordnung aus Wellrohrweichen und Verbindungsmitteln nach Anspruch 12 sowie ein Verfahren zur Herstellung einer Wellrohrweiche nach Anspruch 13.

Es ist z.B. aus der Motor- und Innenraumverkabelung von Autos bekannt, daß man verschiedene elektrische Kabel mit Bändern, wie z.B. Isolierbändern, umwickelt, um Kabelbäume vor mechanischen Einwirkungen oder vor Hitze zu schützen. Die fertig konfektionierten Kabelbäume werden dann im Auto verlegt. Nachteilig ist hierbei, daß derartige Kabelbäume keinen schönen Anblick bieten. Dies gilt insbesondere für diese Bereiche, die für den Käufer sichtbar sind, wie z.B. der Motorraum. Weiter ist nachteilig, daß bei einem nachträglichen Verlegen eines zusätzlichen Kabels dieses nur aufwendig mit dem bereits verlegten Kabelbaum verbunden werden kann und das Erscheinungsbild weiter leidet.

Um diesen Nachteil zu beseitigen, ist es bekannt, die einzelnen Elektrokabel in Wellrohren zu verlegen. Hierbei ergibt sich jedoch das Problem, daß die Kabelbäume verzweigt sind. Deshalb können nur diejenigen Abschnitte mit Wellrohren versehen werden, an denen keine Verzweigungen auftreten. In diesem Fall ist wiederum nachteilig, daß die verlegten Kabel an den Verzweigungsstellen nicht geschützt sind und das Erscheinungsbild in unerwünschter Weise stören.

Um dem entgegenzutreten, wurden die Wellrohre mit einem sog. Wellrohrverbinder verbunden.

Da die Wellrohre aufklappbar sind, um die Kabel nachträglich einlegen zu können, mußten auch die Wellrohrverbinder aufklappbar gestaltet werden. Bei den bekannten Wellrohrverbindern handelt es sich um Spritzgußteile aus hochbelastbarem Polyamid, die Wellrohre unterschiedlichen Durchmessers verbinden können und als starre Verbindungsstücke zwischen den Wellrohren eingesetzt werden. Das hochwertige Polyamid, das erhebliche Kosten verursacht, ist deshalb notwendig, weil ein Scharnier vorgesehen werden muß, um den Wellrohrverbinder aufklappen zu können. Dieses Scharnier muß hochbelastbar sein, um bei mehrmaligem Öffnen und Schließen oder im geschlossenen Zustand nach längerer Einsatzzeit durch die große Überdehnung des Materials in diesem Bereich nicht zu brechen.

Nachteilig bei der bisherigen Gestaltung ist, daß der verwendete Werkstoff aufgrund der hohen Belastbarkeit teuer ist, daß das Verbindungsstück starr ausgeführt wird, was die Flexibilität des zu verlegenden Wellrohrbaumes beeinträchtigt und daß das Wellrohr und die Wellrohrverbinder aus unterschiedlichen Materialien gefertigt sind. Letzteres erschwert insbesondere das Recycling der Innereien eines Kraftfahrzeuges.

Des weiteren sind diese Teile sehr groß, da im Innenraum genügend Platz für alle Kabel vorhanden sein muß und die Wandstärken dieser Spritzgußteile aus fertigungstechnischen Gründen und aus Gründen der Stabilität 1-1,5 mm betragen müssen. Daher ist das Gewicht dieser Teile ebenfalls relativ hoch. Beide Punkte sind im modernen Fahrzeugbau durch immer engere Platzverhältnisse und einem möglichst geringen Gesamtgewicht der Fahrzeuge nicht mehr erwünscht. Zur Herstellung dieser Teile sind zudem sehr kostenintensive Werkzeuge notwendig. Aufgabe der Erfindung ist es, die oben genannten Nachteile zu überwinden und insbesondere einen Wellrohrverbinder bereitzustellen, der den Aufbau eines höchst flexiblen Wellrohrbaumes ermöglicht.

Die oben genannte Aufgabe wird durch die Wellrohrweiche nach Anspruch 1 sowie durch das Verbindungsmittel zum Verbindung der Wellrohrweiche mit Wellrohren oder anderen Wellrohrweichen nach Anspruch 7 und durch die Wellrohranordnung aus Verbindungsmittel und Wellrohrweiche nach Anspruch 12 gelöst. Das Verfahren nach Anspruch 13 dient zur Herstellung der erfindungsgemäßen Wellrohrweichen.

Vorteilhafte Weiterbildungen gehen aus den Unteransprüchen hervor.

Erfindungsgemäß werden die Wellrohrweichen so gebildet, daß von einem Hauptwellrohr ein Nebenwellrohr oder mehrere Nebenwellrohre abzweigen, wobei die Richtung der Abzweigung beliebig festlegbar ist. Hergestellt werden diese Wellrohre, indem ein Hauptwellrohr extrudiert und korrugiert wird und das Nebenwellrohr ausgehend von dem Hauptwellrohr ausgeblasen wird. Durch das Ausblasen sind demnach die Innenräume des Hauptwellrohrs und des Nebenwellrohrs miteinander verbunden oder, anders ausgedrückt, das Nebenwellrohr mündet in das Hauptwellrohr ein. Selbstverständlich können Hauptwellrohr und Nebenwellrohr unterschiedliche Durchmesser aufweisen. Auch kann sich der Durchmesser des Hauptwellrohrs im Bereich der Einmündung des Nebenwellrohres verjüngen. Die Verjüngung kann an einer prinzipiell beliebigen Stelle vorgesehen werden. Auch die Größenordnung der Verjüngung kann im Prinzip beliebig sein. Bei dem Überdruckverfahren ist lediglich der Dorn als einschränkendes Hindernis mit in Betracht zu ziehen. Weder das Hauptwellrohr in den ursprünglichen Abmessungen, noch das Hauptwellrohr mit den verjüngten Abmessungen darf geringere Abmessungen bzw. einen geringeren Innendurchmesser aufweisen, als es den Abmessungen des Innendorns beim Über druckverfahren entspricht.

Beim Unterdruckverfahren können die Abmessungsübergänge im Prinzip beliebig sein.

Da das Überdruck- und das Unterdruckverfahren dem Fachmann jeweils hinreichend bekannt ist, brauchen diese Verfahren zur Ausbildung von Rohren bzw. Wellrohren hier nicht weiter erörtert werden. Zum Prinzip des Überdruckverfahrens sei nur beispielhaft auf die EP 0 048 113 A1 verwiesen. Zum Prinzip des Unterdruckverfahrens sei beispielhaft auf die EP 0 648 158 A1 verwiesen. Die Offenbarung beider Druckschriften wird hiermit durch Bezugnahme in die vorliegende Offenbarung ausdrücklich aufgenommen, wobei die dort beschriebenen Merkmale in Verbindung mit den hier offenbarten Merkmalen zur Erfindung gehören können.

Bezüglich des Nebenwellrohrs sei ausgeführt, daß der im Bereich des Nebenwellrohrs anfallende erhöhte Materialverbrauch zu dessen Herstellung dadurch gedeckt werden kann, daß der Korrugator kurzzeitig langsamer läuft, so daß zweitweise mehr Material pro Längeneinheit des Korrugators bzw. der Wellrohrweiche angeboten wird.

Andererseits ist es auch möglich, daß der vor dem Korrugator angeordnete Extruder kurzzeitig mehr Material anbietet, beispielsweise indem die Extruderschnecke zeitweise schneller dreht.

Auch eine Überlagerung dieser oder gleichwirkender Möglichkeiten kann hier hilfreich sein.

Entsprechend kann immer vorgegangen werden, wenn die Ausformung der Wellrohrweiche einen größeren oder kleineren Materialbedarf erfordert, also etwa bei Verjüngungen (Korrugator kann schneller laufen) oder bei Durchmessererweiterungen (Korrugator läuft langsamer).

Natürlich lassen sich auf diese Weise auch andere Arten von Wellrohrteilen bzw. - rohren mit vergleichweise gleichbleibender Wandstärke und mit Formgebungsvariationen ausbilden.

Um das Nebenwellrohr aus den Formbacken besser entnehmen zu können, bzw. um Hinterschneidungen ausbilden und entnehmen zu können, können die Formbacken federbelastete Schieberelemente aufweisen, die beim Abziehen der Wellrohrweiche auseinandergetrieben werden, um sich anschließend wieder für eine nachfolgende Ausbildung zu schließen.

Wie bereits oben bei der Beschreibungseinleitung erwähnt, werden die Wellrohre vorzugsweise geschlitzt oder weisen eine Art von Deckelkonstruktion auf, um Kabel leichter in das Wellrohr verlegen zu können. Erfindungsgemäß ist deshalb die Wellrohrweiche ebenfalls geschlitzt, um sie somit aufklappbar zu gestalten und auf einfache Weise die Kabel einlegen zu können.

Vorteilhaft bei der Wellrohrweiche im Gegensatz zu dem bisherigen Wellrohrverbinder ist, daß die Weiche selbst, da sie als Wellrohr ausgebildet ist, flexibel ist. Dies erleichtert z.B. das Einbringen eines vorher vorgefertigten Wellrohrbaumes in das Innere eines Fahrzeuges, da der Wellrohrbaum leichter gekrümmt bzw. geknickt werden kann, um ihn z.B. an den verschiedenen Fahrzeugsäulen (A-Säule, B-Säule) vorbei in das Fahrzeuginnere zu bringen.

Obwohl in dieser Beschreibung hauptsächlich von dem Anwendungsgebiet bei der Fahrzeugherstellung die Rede ist, können natürlich die Wellrohrbäume überall dort verwendet werden, wo ansonsten Wellrohre eingesetzt werden, wie dies z.B. beim Hausbau der Fall ist.

Vorteilhaft bei den erfindungsgemäßen Wellrohrweichen ist jedenfalls, daß diese mit einem kontinuierlichen Herstellverfahren mit geringen Werkzeugkosten hergestellt werden können und daß sich ein einheitliches optisches Erscheinungsbild ergibt, denn die Wellrohre werden durch Wellrohrweichen gleichen Materials verbunden.

Um das oben erwähnte Aufklappen des Wellrohrbaumes zu erleichtern, wird der Schlitz vorzugsweise so gesetzt, daß er das Nebenwellrohr oder die Nebenwellrohre halbiert. Auf diese Art und Weise kann die ganze Wellrohrweiche zur Aufnahine von Elektrokabeln aufgeklappt werden. Um dieses Aufklappen zu erleichtern, wird vorzugsweise der dem Schlitz gegen

überliegende Bereich der Wellrohrweiche geschwächt. Wie bereits oben erwähnt, ist zur Herstellung der erfindungsgemäßen Wellrohrweiche ein kontinuierliches Herstellungsverfahren möglich. Gleichzeitig damit ergibt sich, daß das Hauptwellrohr und das Nebenwellrohr oder die Nebenwellrohre einstückig miteinander ausgebildet sind. Dies erhöht die Stabilität. Alternativ können erfindungsgemäß aber auch die Nebenwellrohre an den Hauptwellrohren so angeformt werden, daß diese in die Hauptwellrohre münden, wobei dieses Anformen auch nach dem Herstellen des Hauptwellrohres erfolgen kann.

Die Wellrohrweichen können mit weiteren Wellrohrweichen oder Wellrohren mit Verbindungsmitteln verbunden werden. Da derartige Verbindungsmittel vorzugsweise nur jeweils ein oder Zwei Wellenberge der zu verbindenden Wellrohre jeweilig übergreifen, sind diese Verbindungsmittel sehr kurz, wodurch selbst bei starrer Ausführung der Verbindungsmittel die Flexibilität des Wellrohrbaumes nicht beeinträchtigt wird. Um eine derartige Verbindung bereitzustellen, werden vorzugsweise sog. Clips verwendet, die wie Schnallen um die Wellrohre umgelegt werden und in die Wellentäler eingreifen. Dabei ergibt sich nach einem Schließen der Schnalle, vorzugsweise mit einem Schnappverschluß, eine feste Verbindung der verbundenen Wellenberge bzw. Wellentäler und damit der Wellrohre bzw. Wellrohrweichen.

Damit die Anbringung eines Anbindungsringes Zum Verbinden der Wellrohrweiche mit einem Wellrohr zu keiner Durchmessererhöhung führt, so daß trotz des Anbindungsrings im Anschlußbereich im Durchmesser keine Diskontinuität auftritt, kann der Außendurchmesser wenigstens der letzten Wellung der Wellrohrweiche bzw. des anzuschließenden Wellrohrs kleiner ausgebildet sein, so daß der Anschlußbereich trotz des Anbindungsrings keinen größeren Außendurchmesser hat.

Dabei können die Verbindungsmittel selbst als Wellrohre ausgebildet sein, die vorzugsweise in Längsrichtung geschlitzt sind. Diese vorzugsweise nur kurzen Wellrohre sind so gestaltet, daß sie die zu verbindenden Wellrohrteile umgreifen können, wenn sie an ihrem Schlitz auseinandergebogen werden. Aufgrund ihrer Elastizität schnappen sie dann so zusammen, daß ihre paßgenau ausgebildeten Wellrohrtäler an ihrer Innenseite in die Außenseiten der Wellrohrtäler der zu verbindenden Wellrohrteile paßgenau eingreifen. Alternativ können die zur Verbindung verwendeten, vorzugsweise kurzen Wellrohre auch einen kleineren Durchmesser als die zu verbindenden Wellrohre oder Wellrohrweichen aufweisen. In diesem Fall können dann die der Verbindung dienenden Verbindungs-Wellrohre von den zu verbindenden Wellrohren bzw. Wellrohrweichen umgriffen werden. Dabei ist die äußere Oberfläche der Verbindungswellrohre möglichst so gestaltet, daß die zu verbindenden Wellrohre bzw. Wellrohrweichen in die Wellentäler des Verbindungs-Wellrohres möglichst paßgenau eingreifen.

Die Wellrohrweiche sollte insbesondere eine Geometrie aufweisen, so daß mittels eines Verbindungselementes das Wellrohr paßgenau mit der Weiche verbunden werden kann. Diese Verbindung führt in keinem Fall nach innen zu einer nennenswerten Querschnittsverengung sowie nach außen zu einem Materialaufbau.

Weiter können alternativ die Wellrohre mit einer Wellung versehen werden, die wie ein Gewinde ausgebildet ist, so daß die Wellrohre ineinander verschraubt werden können. Auf diese Art und Weise kann auf zusätzliche Verbindungsmittel verzichtet werden.

Schließlich können auch anstelle der bisher beschriebenen Verbindungsmittel Schnüre oder Bänder eingesetzt werden, die vorzugsweise in der gleichen Farbe gestaltet sind wie die Wellrohre, um somit wenig aufzufallen. Diese Schnüre oder Bänder werden dabei z.B. in ein Tal eines Wellrohrteiles gewickelt und dann von diesem Tal ausgehend um ein Tal eines benachbarten Wellrohrteiles gewickelt. Danach werden die Enden des Bandes bzw. der Schnur verbunden und vorzugsweise festgezurrt. Auf diese Art und Weise ist eine besonders flexible Verbindung der Wellrohrteile, wie z.B. Wellrohre und Wellrohrweichen, möglich, die gleichzeitig optisch sehr unauffällig ist, da ein Großteil des Bandes innerhalb der Täler verläuft.

An der Schlitzung kann die Weiche eine Geometrie aufweisen, so daß beide Hälften beim Zusammendrücken und somit beim Verschluß der Weiche ineinander greifen. Auch kann in diesem Fall durch die Aussparung eines Steges das Einlegen der Kabel erleichert werden.

Die Weiche kann auch direkt in einem langen Wellrohrstück integriert und als 1-Modul zum Anschluß eines Abganges in definiertem Winkel ausgeführt sein.

Die Abgänge der Weiche können eine speziell abgerundete Geometrie aufweisen, um die herausgeführten Kabel nicht zu beschädigen.

Die Weiche kann im Querschnitt alle denkbaren Geometrien aufweisen (oval, quadratisch).

Der Winkel des Abganges muß nicht zwangsweise 90° betragen, sondern wird, je nach Verwendungszweck, speziell abgestimmt.

Um die Weiche z.B. an der Karosserie befestigen zu können, können an der Oberfläche Befestigungselemente oder Aussparungen für Befestigungselemente vorgesehen werden.

Wahlweise können an der Wellenweiche oder an den Wellrohren auch Ansätze für die Verbindungsmittel, wie z.B. Laschen oder Fortsätze oder Ausnehmungen oder Löcher, ausgebildet sein, um das Ansetzen der Verbindungsmittel zum Verbinden von Wellrohrteilen zu erleichtern und zu stabilisieren. Insbesondere können dabei z.B. an den Wellrohrenden oder Enden der Wellrohrweiche flanschähnliche Ausbildungen mit vorzugsweise weiteren Ansatzmöglichkeiten für Verbindungsmittel vorgesehen sein.

Wird das oben erwähnte Band verwendet, so kann dies erfindungsgemäß z.B. so gestaltet sein, daß es z.B. in der Art eines Kabelbinders gestaltet ist, um dann die Enden des Bandes ratschenähnlich festziehen zu können. Dabei ist in diesem Fall auch wiederum vorzugsweise die Verbindung lösbar.

Weitere Vorteile der vorliegenden Erfindung gehen aus der nun folgenden detaillierten Beschreibung anhand der Figuren hervor.
- Fig. 1: zeigt eine dreidimensionale Ansicht einer Ausführungsform der erfindungsgemäßen Wellrohrweiche.
- Fig. 2: zeigt die Wellrohrweiche der Fig. 1 in Draufsicht.
- Fig. 3: zeigt die Wellrohrweiche der Fig. 1 in einer Seitenansicht.
- Fig. 4: zeigt die Wellrohrweiche der Fig. 1 in einer Frontansicht.

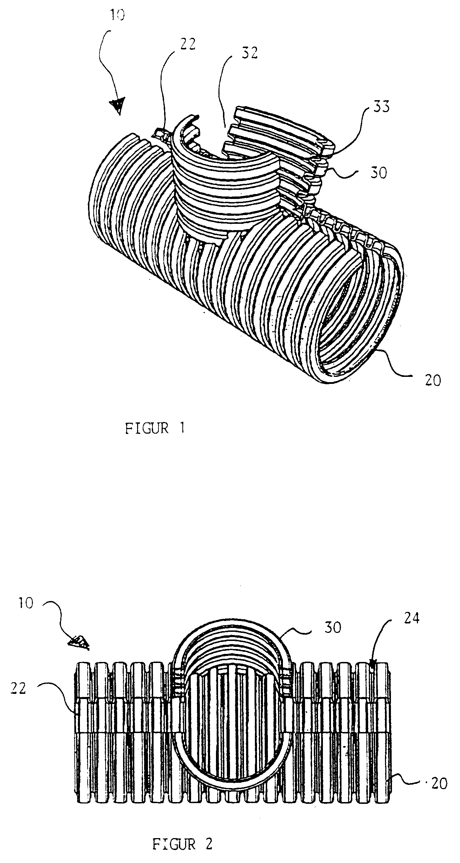

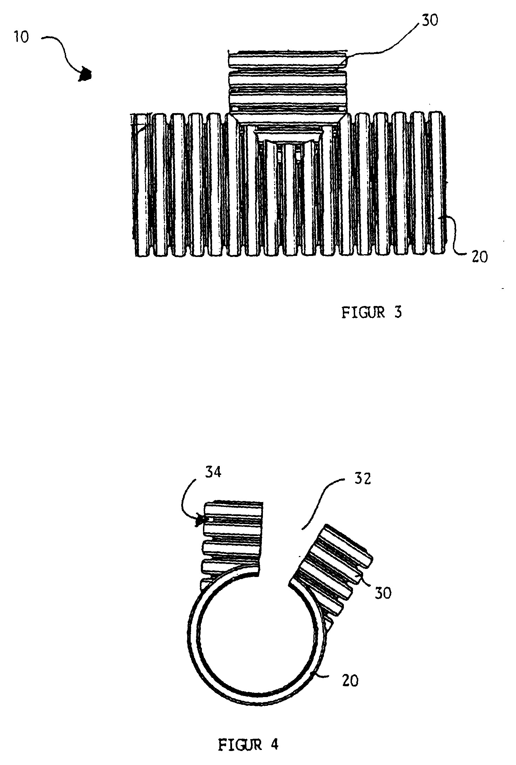

Die in den Fig. 1 bis 4 gezeigte Wellrohrweiche 10 weist ein Hauptwellrohr 20 auf, das durch einen Längsschlitz 22 gespaltet ist. Beim Schlitzen des Hauptwellrohres 20 wird vorzugsweise das Nebenwellrohr 30 mit geschlitzt. Im vorliegenden Fall geht also sowohl der Nebenlängsschlitz 32 als auch der Nebenlängenschlitz 33 in den Hauptlängsschlitz 22 über. Dabei wird das Nebenwellrohr 30 durch die beiden Nebenlängsschlitze 32 und 33 so gespaltet, daß es in zwei Hälften auseinandergeklappt werden kann. Beim Auseinanderklappen des Nebenwellrohres 30 wird automatisch das Hauptwellrohr 20 entlang des Hauptlängsschlitzes 22 auseinandergebogen, so daß dann z.B. Kabel eingelegt werden können. Die zu dem Längsschlitz 22 gegenüberliegende Seite ist vorzugsweise geschwächt ausgebildet, um ein Aufbiegen zu erleichtern.

Die oben beschriebenen Verbindungsmittel greifen nun vorzugsweise in die Wellentäler 24 des Hauptwellrohres oder 34 des Nebenwellrohres ein. Die Verbindungsmittel sind dabei vorzugsweise so kurz, daß sie nur in das nächstliegende Wellental oder in die beiden nächstliegenden Wellentäler eingreifen. Dadurch wird die Flexibilität der Anordnung erhöht.

Wie in den Figuren zu sehen ist, weist das Nebenwellrohr nur drei vollständig ausgeformte Wellrohrringe auf. Selbstverständlich können erfindungsgemäß auch weniger oder mehr Wellrohrringe vorgesehen werden. Bevorzugt wird jedoch eine Anzähl von etwa zwei bis vier Wellrohrringen.

Weiter ist erkennbar, daß der Durchmesser des Nebenwellrohres kleiner ist als der Durchmesser des Hauptwellrohres. Selbstverständlich können für das Nebenwellrohr und das Hauptwellrohr auch gleiche Durchmesser gewählt werden. Schließlien können an ein Hauptwellrohr weitere Nebenwellrohre angeformt werden. Diese werden vorzugsweise so angeordnet, daß sie ebenfalls beim Schlitzen des Hauptwellrohres in Zwei Hälften geteilt werden. Aber eine davon abweichende Anordnung der Nebenwellrohre ist auch möglich.

Es können auch alle drei Ausgänge unterschiedliche Durchmesser aufweisen, die jeweils auf das anschließende Wellrohr ausgelegt sind.

## Patentansprüche

1. Wellrohrweiche mit einem Hauptwellrohr, **gekennzeichnet** durch mindestens ein Nebenwellrohr, das in das Hauptwellrohr mündet.

2. Wellrohrweiche nach Anspruch 1, dadurch **gekennzeichnet**, daß das Hauptwellrohr einen längs der Erstreckungsrichtung des Hauptwellrohres verlaufenden Hauptlängsschlitz in seinem Umfang aufweist.

3. Wellrohrweiche nach Anspruch 2, dadurch **gekennzeichnet**, daß das Nebenwellrohr mindestens einen längs der Erstreckungsrichtung des Nebenwellrohres verlaufenden Nebenlängsschlitz in seinem Umfang aufweist.

4. Wellrohrweiche nach einem der vorhergehenden Ansprüche, dadurch **gekennzeichnet**, daß das Hauptwellrohr mit einem Hauptlängsschlitz derartig längsgeschlitzt ist, daß der Hauptlängsschlitz in zwei Nebenlängsschlitze übergeht, die das Nebenwellrohr in Längsrichtung vorzugsweise zumindest in etwa halbieren.

5. Wellrohrweiche nach einem der vorhergehenden Ansprüche, dadurch **gekennzeichnet**, daß das Hauptwellrohr gegenüberliegend zu dem Hauptlängsschlitz geschwächt ist, um ein Aufklappen des Hauptwellrohres zu erleichtern.

6. Wellrohrweiche nach einem der vorhergehenden Ansprüche, dadurch **gekennzeichnet**, daß das Hauptwellrohr mit dem Nebenwellrohr einstückig ausgebildet ist.

7. Wellrohrweiche nach einem der Ansprüche 1 bis 6, dadurch **gekennzeichnet**, daß an wenigstens einem Anschlußende wenigstens eine Wellung mit einem geringeren Außendurchmesser vorgesehen ist.

8. Verbindungsmittel zum Verbinden von Wellrohren und/oder Wellrohrweichen nach Anspruch 1 bis 7 untereinander bzw. miteinander, dadurch **gekennzeichnet**, daß das Verbindungsmittel in wenigstens ein Wellental der zu verbindenden Wellrohre bzw. Wellrohrweichen von außen jeweilig eingreift und durch verschließbares Umgreifen der jeweiligen Wellentäler verbindet.

9. Verbindungsmittel nach Anspruch 8, dadurch **gekennzeichnet**, daß das Verbindungsmittel als rohrförmige Einrichtung, insbesondere als Schnalle oder Clips ausgebildet ist.

10. Verbindungsmittel nach Anspruch 8, dadurch **gekennzeichnet**, daß das Verbindungsmittel als ein in die jeweiligen Wellentäler der zu verbindenden Wellrohre bzw. Wellrohrweichen einpaßbares Band ausgebildet ist, dessen Enden verbindbar sind, wobei die Länge des Bandes mindestens so gewählt ist, daß die jeweiligen Wellentäler zur Verbindung umwickelt werden können.

11. Verbindungsmittel nach Anspruch 10, dadurch **gekennzeichnet**, daß das Band an seinen Enden ineinander, vorzugsweise lösbar, formschlüssig einschnappende Einrichtungen aufweist, wobei das Band vorzugsweise ratschenähnlich, die jeweiligen Wellentäler umgreifend festziehbar ist.

12. Verbindungsmittel nach Anspruch 8, dadurch **gekennzeichne**t, daß das Verbindungsmittel als Wellrohr ausgebildet ist, dessen Täler und/oder Berge paßgenau in dazu komplementäre Wellentäler oder Wellenberge der zu verbindenden Wellrohre bzw. Wellrohrrweichen eingreift, wobei das Verbindungsmittel entweder einen kleineren Durchmesser hat als die zu verbindenden Wellrohre bzw. Wellrohrweichen, so daß die Außenseite dieses Verbindungsmittels in die Innenseite der zu verbindenden Wellrohre bzw. Wellrohrweichen eingreift, oder daß der Durchmesser größer ist als derjenige der zu verbindenden Wellrohre und Wellrohrweichen, so daß das Innere des als Verbindungsmittel verwendeten Wellrohrs in die zu verbindenden Wellrohre bzw. Wellrohrweichen eingreift und wobei in letzterem Falle das als Verbindungsmittel verwendete Wellrohr vorzugsweise geschlitzt ist.

13. Wellrohranordnung mit mindestens einer Wellrohrweiche nach Anspruch 1 bis 7, mit mindestens einem Wellrohr und/oder mindestens einer weiteren Wellrohrweiche nach Anspruch 1 bis 7 und mit Verbindungsmitteln nach Anspruch 8 bis 12 zum Verbinden der Wellrohre bzw. Wellrohrweichen untereinander und/oder miteinander.

14. Verfahren zum Herstellen einer Wellrohrweiche nach Anspruch 1 bis 7, dadurch **gekennzeichnet**, daß das Hauptwellrohr extrudiert und korrugiert wird und das Nebenwellrohr dabei ausgeblasen wird.

15. Verfahren nach Anspruch 14, dadurch **gekennzeichnet,** daß ein Korrugator zur Erstellung und/oder ein Extruder langsamer bzw. schneller betrieben werden, um einen erhöhrten Materialbedarf insbesondere im Bereich eines Nebenwellrohrs zu decken.
